# EUROPÄISCHE PATENTSCHRIFT

(11) **EP 3 362 284 B1**
(45) Veröffentlichungstag und Bekanntmachung des Hinweises auf die Patenterteilung: **31.07.2019**
(21) Anmeldenummer: 16775241.9
(22) Anmeldetag: 29.09.2016
(51) Int. Cl.: B32B 17/10, H05B 3/86

(54) **BEHEIZBARE LAMINIERTE FAHRZEUGSCHEIBE MIT VERBESSERTER WÄRMEVERTEILUNG**
HEATABLE LAMINATED VEHICLE PANE WITH IMPROVED HEAT DISTRIBUTION
VITRE DE VEHICULE LAMINEE POUVANT ETRE CHAUFFEE PRESENTANT UNE REPARTITION AMELIOREE DE LA CHALEUR

(30) Priorität: 13.10.2015 EP 15189476
(43) Veröffentlichungstag der Anmeldung: 22.08.2018
(73) Patentinhaber: Saint-Gobain Glass France, 92400 Courbevoie (FR)
(72) Erfinder: KLEIN, Marcel, 52499 Baesweiler (DE); SCHULZ, Valentin, 52382 Niederzier (DE)
(74) Vertreter: Schönen, Iris
(86) Internationale Anmeldenummer: PCT/EP2016/073359
(87) Internationale Veröffentlichungsnummer: WO 2017/063895

(56) Entgegenhaltungen:
- EP-A2- 1 168 888
- DE-A1-102007 008 833
- US-A- 4 361 751
- US-A1- 2003 116 551

## Beschreibung

Die Erfindung betrifft eine beheizbare laminierte Fahrzeugscheibe, ein Verfahren zur ihrer Herstellung und die Verwendung einer solchen Fahrzeugscheibe.

Fahrzeugscheiben mit transparenten, beheizbaren Beschichtungen sind hinlänglich bekannt. Lediglich beispielhaft wird auf die Veröffentlichungen WO03/024155A2, US2007/0082219A1, US2007/0020465A1, EP2274251A1, EP1980137B1 und EP1454509B1 verwiesen. Sie werden insbesondere als Windschutzscheiben eingesetzt, für welche besonders hohe optische Anforderungen gelten. Durch die beheizbare Beschichtung kann die Windschutzscheibe mit einer aktiven Heizfunktion ausgestattet werden, um sie bei Bedarf von Beschlag oder Eis zu befreien, ohne dass die Durchsicht durch Heizdrähte oder aufgedruckte Heizleiter beeinträchtigt wird. Die beheizbaren Beschichtungen sind üblicherweise mehrschichtige Systeme enthalten Silberschichten. Sie werden mit mindestens zwei streifen- oder bandförmigen Stromsammelschienen (*Busbars*) elektrisch kontaktiert, die den Strom möglichst gleichmäßig in die Beschichtung einleiten sollen. Zwischen den Stromsammelschienen fließt ein Strom durch die Beschichtung, wodurch ein Heizfeld ausgebildet wird.

Bei der Konstruktion der beheizbaren Fahrzeugscheiben stellt sich die Herausforderung der gleichmäßigen Wärmeverteilung. So gilt es insbesondere, Bereiche mit einer allzu großen, lokalen Wärmeerzeugung zu vermeiden. Dort können nämlich sehr hohe Scheibentemperaturen auftreten, an denen sich Personen verbrennen können, die den Scheiben große thermische Spannungen auferlegen und die Klebstellen von Anbauteilen lösen können. Bereiche mit einer erhöhten lokalen Wärmeerzeugung treten beispielsweise dort auf, wo die Stromsammelschienen mit einer externen Zuleitung kontaktiert sind, weil an diesen Stellen der Stromübergang in die beheizbare Beschichtung am größten ist.

Da leitfähige Beschichtungen elektromagnetische Strahlung stark abschirmen, ist es üblich, lokale Bereiche vorzusehen, in denen die Beschichtung ganz oder teilweise fehlt. So wird der Funkdatenverkehr ins Fahrzeuginnere gewährleistet und die Funktionsfähigkeit von im Fahrzeuginneren angebrachten Sensoren, die beispielsweise ein Infrarot-Signal detektieren, bleibt erhalten. Diese lokalen entschichteten oder beschichtungsfreien Bereich werden gemeinhin als Kommunikationsfenster oder Sensorfenster bezeichnet. Jedoch beeinträchtigen beschichtungsfreie Zonen die elektrischen Eigenschaften der Heizschicht, was sich zumindest lokal auf die Stromdichteverteilung des durch die Heizschicht fließenden Heizstroms auswirkt. Tatsächlich verursachen sie eine stark inhomogene Heizleistungsverteilung, bei der die Heizleistung unterhalb und in der Umgebung der beschichtungsfreien Zonen deutlich verringert ist. Andererseits treten Stellen mit einer besonders hohen Stromdichte auf (*Hot Spots*), in denen die Heizleistung stark erhöht ist. In der Folge können auch in der Umgebung von Kommunikationsfenstern sehr hohe lokale Scheibentemperaturen auftreten. Es sind verschiedene Ansätze vorgeschlagen worden, die Inhomogenität der Heizleistung infolge der Anwesenheit eines Kommunikationsfensters abzumildern. Sie beruhen insbesondere auf an die Busbar angeschlossene Hilfsleiter, wie beispielsweise in WO2010136400A1, WO2012031907A1 oder WO2012031908A1, oder auf Laserstrukturierungen der Heizschicht um das Kommunikationsfenster herum, wie beispielsweise in WO2014095152A1 oder WO2014095153A1.

Der Erfindung liegt die Aufgabe zugrunde, eine laminierte Fahrzeugscheibe mit verbesserter Wärmeverteilung bereitzustellen, die einfach und kostengünstig herzustellen ist.

Die Aufgabe der vorliegenden Erfindung wird erfindungsgemäß durch eine beheizbare laminierte Fahrzeugscheibe gemäß Anspruch 1 gelöst. Bevorzugte Ausführungen gehen aus den Unteransprüchen hervor.

Die erfindungsgemäße beheizbare laminierte Fahrzeugscheibe ist zur Abtrennung eines Fahrzeuginnenraums von einer äußeren Umgebung vorgesehen. Die Fahrzeugscheibe ist also eine Fensterscheibe, die in eine Fensteröffnung der Fahrzeugkarosserie eingesetzt ist oder dafür vorgesehen ist. Die erfindungsgemäße Fahrzeugscheibe ist insbesondere eine Windschutzscheibe eines Kraftfahrzeugs.

Die erfindungsgemäße Fahrzeugscheibe umfasst mindestens eine erste und eine zweite Scheibe, die über eine thermoplastische Zwischenschicht miteinander verbunden sind. Die beiden Scheiben können auch als Außenscheibe und Innenscheibe bezeichnet werden. Mit Innenscheibe wird dabei diejenige Scheibe bezeichnet, welche in Einbaulage dem Innenraum des Fahrzeugs zugewandt ist. Mit Außenscheibe wird diejenige Scheibe bezeichnet, welche in Einbaulage der äußeren Umgebung des Fahrzeugs zugewandt ist. Die thermoplastische Zwischenschicht ist typischerweise aus mindestens einer thermoplastischen Folie ausgebildet.

Diejenige Oberfläche der jeweiligen Scheibe, welche in Einbaulage der äußeren Umgebung des Fahrzeugs zugewandt ist, wird als außenseitige Oberfläche bezeichnet. Diejenige Oberfläche der jeweiligen Scheibe, welche in Einbaulage dem Innenraum des Fahrzeugs zugewandt ist, wird als innenraumseitige Oberfläche bezeichnet. Die innenraumseitige Oberfläche der Außenscheibe ist über die thermoplastische Zwischenschicht mit der außenseitigen Oberfläche der Innenscheibe verbunden. Üblicherweise wird die außenseitige Oberfläche der Außenscheibe als "Seite I" bezeichnet, die innenraumseitige Oberfläche der Außenscheibe als "Seite II", die außenseitige Oberfläche der Innenscheibe als "Seite III" und die innenraumseitige Oberfläche der Innenscheibe als "Seite IV".

Die erfindungsgemäße Fahrzeugscheibe umfasst außerdem eine elektrisch beheizbare Beschichtung. Die beheizbare Beschichtung kann auf einer der Oberflächen der Außenscheibe oder der Innenscheibe angeordnet sein, insbesondere auf den der thermoplastischen Zwischenschicht zugewandten Oberflächen (Seite II oder Seite III), wo die beheizbare Beschichtung im Laminat vorteilhaft vor Korrosion und Beschädigung geschützt ist. Alternativ kann die beheizbare Beschichtung in die thermoplastische Zwischenschicht eingelagert sein, insbesondere auf einer polymeren Trägerfolie innerhalb der Zwischenschicht angeordnet sein.

Die erfindungsgemäße beheizbare Beschichtung ist transparent. Unter einer transparenten Beschichtung wird im Sinne der Erfindung eine Beschichtung verstanden, die im sichtbaren Spektralbereich eine Transmission von mindestens 70% aufweist, bevorzugt mindestens 80 %, besonders bevorzugt mindestens 90%.

Die beheizbare Beschichtung ist mit mindestens zwei sogenannten Stromsammelschienen elektrisch kontaktiert. Die Stromsammelschienen werden häufig auch als *Busbars* oder Sammelelektroden bezeichnet. Sie sind typischerweise band- oder streifenförmig ausgebildet und dienen dazu, den Strom möglichst homogen über die Breite der Beschichtung in diese einzuleiten. Die Stromsammelschienen sind zum elektrischen Verbinden mit den beiden Polen einer Spannungsquelle vorgesehen. Die beheizbare Beschichtung ist elektrisch so mit den Stromsammelschienen verbunden, dass durch Anlegen einer Speisespannung ein Heizstrom zwischen den mindestens zwei Stromsammelschienen fließt, wodurch in Folge des elektrischen Widerstands der Beschichtung und der damit verbundenen Erwärmung ein Heizfeld zwischen den Stromsammelschienen gebildet wird. Typischerweise sind die Sammelschienen direkt auf oder unter der beheizbaren Beschichtung angeordnet, stehen mit der beheizbaren Beschichtung also in direktem Kontakt.

Die Fahrzeugscheibe ist erfindungsgemäß mit mindestens einem metallenen Element ausgestattet, welches so auf oder in der Fahrzeugscheibe angeordnet ist, dass Wärme aus einer Region des Heizfelds mit erhöhter Wärmeerzeugung mittels Wärmeleitung des metallenen Elements abgeführt wird in eine Region mit geringerer Wärmeerzeugung. Die Erfinder haben erkannt, dass mit dieser einfach und kostengünstig zu realisierenden Maßnahme die Homogenität der Wärmeverteilung auf der Scheibe deutlich verbessert werden kann, wodurch insbesondere gefährliche *Hot Spots* vermieden werden können und die Beheizung in kälteren Regionen der Scheibe verbessert werden kann. Das sind große Vorteile der vorliegenden Erfindung.

Das metallene Element ist bevorzugt ein flächiges Element. Unter einem flächigen Element wird ein Element verstanden dessen Dicke deutlich geringer ist als seine Breite und Länge, wie beispielswiese eine Folie oder ein Blech. Das flächige Element ist bevorzugt bei Raumtemperatur (insbesondere 20°C) biegbar und flexibel, so dass es sich an die typischerweise gebogene Form der Fahrzeugscheibe anpassen kann, ohne eigens vorgeformt zu werden. Alternativ ist es aber auch möglich, ein starres Element zu verwenden und dieses vorher mit der passenden Biegung zu versehen. Das flächige Element ist insbesondere flächig auf oder in der Fahrzeugscheibe angeordnet, also im Wesentlichen parallel zu den Scheibenoberflächen.

Das metallene Element weist bevorzugt eine spezifische Wärmeleitfähigkeit von mindestens 140 W/(m K) auf, bevorzugt von mindestens 350 W/(m K).

Das metallene Element ist so angeordnet, dass es einen Abschnitt der beheizbaren Beschichtung überlappt, der Bereiche unterschiedlicher Wärmeerzeugung enthält. Die Projektion des metallenen Elements auf die beheizbare Beschichtung entspricht einem Bereich der beheizbaren Beschichtung. Dieser Bereich weist lokal eine Heizleistung auf, die mindestens 15 % höher ist als die durchschnittliche Heizleistung des Heizfeldes. Mit "lokal" ist hier gemeint, dass die erhöhte Heizleistung nicht im gesamten Bereich auftritt, sondern dass der Bereich auch Regionen enthält mit einer geringeren Heizleistung. So kann Wärme durch das metallene Element von der Region mit erhöhter Wärmeerzeugung in die Regionen mit geringerer Wärmeerzeugung abgeführt werden. Als Maß für die Heizleistung kann der Temperatur herangezogen werden, die nach einer vorbestimmten Zeit erreicht würde ohne Anwesenheit des metallenen Elements. Sie kann experimentell oder durch Simulationen bestimmt werden.

In einer besonders vorteilhaften Ausgestaltung enthält der Bereich der Projektion des metallenen Elements auf die beheizbare Beschichtung auch eine Region mit unterdurchschnittlicher Heizleistung. So kann die Wärme aus der überdurchschnittlich beheizten Region dazu verwendet werden, die unterdurchschnittlich beheizte Region zusätzlich zu erwärmen. Die Region mit unterdurchschnittlicher Heizleistung weist bevorzugt eine Heizleistung auf, die mindestens 15 % geringer ist als die durchschnittliche Heizleistung des Heizfeldes.

Durch die Erfindung können Inhomogenitäten der Heizleistung, die im Zusammenhang mit einem sogenannten Kommunikations- oder Sensorfenster auftreten, wirksam abgemildert werden. In einer Ausgestaltung der Erfindung weist die Fahrzeugscheibe daher zwischen den Stromsammelschienen, also innerhalb des Heizfeldes, ein solches Kommunikations- oder Sensorfenster auf, also einen örtlich begrenzten Bereich, der ganz oder teilweise frei von der beheizbaren Beschichtung ist. Das Kommunikations- oder Sensorfenster befindet sich typischerweise außerhalb des zentralen Sichtfeldes (Sichtfeld A nach ECE-R 43), üblicherweise im oberen oder unteren Randbereich der Scheibe in der Nähe einer der Stromsammelschienen. Die Beschichtung kann nachträglich entfernt, beispielsweise mechanisch-abrasiv oder durch Laserablation, oder von vornherein von der Beschichtung ausgenommen sein, beispielsweise durch Maskierungstechniken. In Stromflussrichtung gesehen neben dem beschichtungsfreien Bereich bilden sich Regionen erhöhter Wärmeerzeugung aus, weil der um den beschichtungsfreien Bereich fließende Strom dort konzentriert wird. Es können sich gefährliche *Hot Spots* bilden. Das erfindungsgemäße metallische Element ist daher - in Stromflussrichtung gesehen - seitlich zum beschichtungsfreien Bereich angeordnet, bevorzugt beidseitig seitlich zum beschichtungsfreien Bereich. Das metallene Element erstreckt sich dann von einer Region mit geringem Abstand zum beschichtungsfreien Bereich mit einer erhöhten Wärmeerzeugung in eine Region mit größerem Abstand zum beschichtungsfreien Bereich mit geringerer Wärmeerzeugung. Dadurch wird die überschüssige Wärme in unmittelbarer Nähe zum beschichtungsfreien Bereich gleichsam von diesem hinweg transportiert, wodurch die Wärmeverteilung homogenisiert und der *Hot Spot* vermieden oder zumindest abgemildert wird. Der Abstand des metallenen Elements zum beschichtungsfreien Bereich beträgt bevorzugt höchstens 2 mm. Die Breite des metallenen Elements hängt von der Gestaltung der Scheibe ab und beträgt beispielsweise mindestens 10 mm. Die Breite ist die Dimension senkrecht zur Stromflussrichtung.

In einer Weiterbildung der vorstehend beschriebenen Ausgestaltung ist das metallene Element beidseitig seitlich zum beschichtungsfreien Bereich angeordnet und erstreckt sich außerdem dazwischen entlang der von der nächstliegenden Stromsammelschiene abgewandten Seite des beschichtungsfreien Bereichs. Der beschichtungsfreie Bereich ist von drei Seiten vom metallenen Element umgeben, und zwar von allen Seiten mit Ausnahme der der nächstliegenden Stromsammelschiene zugewandten Seiten. Der Vorteil liegt darin, dass die seitlich des beschichtungsfreien Bereichs erzeugte überschüssige Wärme in den Bereich der Beschichtung auf der der nächstliegenden Stromsammelschiene gegenüberliegenden Seite des beschichtungsfreien Bereichs transportiert wird, der gleichsam in "elektrischer Abschattung" des beschichtungsfreien Bereichs liegt und daher nur eine verringerte Wärmeerzeugung aufweist. So wird eine weiter verbesserte Homogenisierung der Heizwirkung erreicht.

Grundsätzlich kann der beschichtungsfreie Bereich auch vollständig, das heißt von allen vier Seiten vom metallenen Element umgeben sein. Ebenso ist es auch denkbar, dass das metallene Element nicht beidseitig, sondern nur einseitig seitlich des beschichtungsfreien Bereichs angeordnet ist und außerdem entlang der von der nächstliegenden Stromsammelschiene abgewandten Seite des beschichtungsfreien Bereichs.

Das metallene Element kann auch über den beschichtungsfreien Bereich verlaufen.

Durch die Erfindung können auch Inhomogenitäten der Heizleistung, die im Zusammenhang mit der elektrische Zuleitung zu einer Stromsammelschiene auftreten, wirksam abgemildert werden. Diese Zuleitung erfolgt mittels eines mit der Stromsammelschiene verbundenen Anschlusskabels, insbesondere eines sogenannten Flach- oder Folienleiters oder eines einfachen Folienstreifens. Im Bereich des Heizfeldes angrenzend an die Kontaktstellen zwischen Zuleitung und Stromsammelschiene entsteht üblicherweise eine erhöhte Wärmeerzeugung, weil ein Teil des Stroms von dieser Kontaktstelle in die beheizbare Beschichtung übergeht, anstatt durch die Stromsammelschiene entlang ihrer gesamten Breite homogen verteilt zu werden. Dies kann dadurch abgemildert werden, das metallene Element die Kontaktstelle zwischen der Stromsammelschiene und der mit ihr verbundenen elektrischen Zuleitung überlappt. Darunter wird verstanden, dass die Projektion des metallenen Elements auf die beheizbare Beschichtung einer Region entspricht, die die Projektion der besagten Kontaktstelle auf die beheizbare Beschichtung enthält. Das metallische Element erstreckt sich von der Kontaktstelle, in deren Umgebung die erhöhte Wärmeerzeugung stattfindet, in Regionen mit geringerer Wärmeerzeugung, wodurch die überschüssige Wärme wirksam abgeleitet und verteilt wird.

Das metallene Element ist bevorzugt eine metallene Folie oder ein metallenes Blech. Zwischen einer Folie und einem Blech wird im Sinne der Erfindung dadurch unterschieden, dass die Folie bei Raumtemperatur (insbesondere 20°C) beigeschlaff ist und das Blech biegesteif. Eine geeignete metallene Folie enthält bevorzugt Kupfer, Aluminium, Silber oder Mischungen oder Legierungen davon. Aufgrund der Wärmeleitfähigkeit und guten Verfügbarkeit ist Kupfer besonders bevorzugt. Die Dicke der Folie beträgt bevorzugt von 5 µm bis 200 µm, besonders bevorzugt von 15 µm bis 80 µm. Ein geeignetes Blech enthält bevorzugt Kupfer, Stahl, Edelstahl, Aluminium oder Mischungen oder Legierungen davon. Besonders bevorzugt sind Stahl, Edelstahl oder Aluminium, weil Anbauteile aus diesen Materialien an Fahrzeugscheiben üblich sind. Die Dicke des Blechs beträgt bevorzugt von 2 mm bis 50 mm, besonders bevorzugt von 5 mm bis 25 mm. Das metallene Element kann auch ein Gussteil sein, beispielsweise enthaltend Stahl, Edelstahl oder Gusseisen, beispielsweise mit einer Dicke von 2 mm bis 50 mm, bevorzugt von 5 mm bis 25 mm.

In einer ersten bevorzugten Ausgestaltung ist das metallene Element in die Fahrzeugscheibe einlaminiert, also zwischen der Außenscheibe und der Innenscheibe angeordnet. Diese Ausgestaltung ist kann für Folien und für Bleche als metallenes Element geeignet, die sich beide einlaminieren lassen. Die Ausgestaltung ist für Folien als metallenes Element besonders bevorzugt, weil durch die dünne Folie der Verbund zwischen Glasscheiben und thermoplastischer Schicht besonders wenig gestört wird, was vorteilhaft hinsichtlich der Stabilität der laminierten Fahrzeugscheibe ist.

Das metallene Element kann in der ersten bevorzugten Ausgestaltung von der beheizbaren Beschichtung getrennt sein durch thermoplastisches Material der Zwischenschicht. Es liegt dann keine elektrische Verbindung zwischen metallischem Element und beheizbarer Beschichtung vor, so dass der Stromfluss nicht durch das metallene Element beeinflusst wird. Die Wärmeleitung erfolgt aber trotzdem ausreichend über das Material der Zwischenschicht hinweg. Insbesondere können folgende Anordnungen gewählt werden:
- Die beheizbare Beschichtung ist auf der innenraumseitigen Oberfläche der Außenscheibe oder der außenseitigen Oberfläche der Innenscheibe aufgebracht und das metallene Element ist in die Zwischenschicht einlaminiert, also bevorzugt zwischen zwei Folien der Zwischenschicht angeordnet.
- Die beheizbare Beschichtung ist auf der innenraumseitigen Oberfläche der Außenscheibe aufgebracht und das metallene Element ist auf der außenseitigen Oberfläche der Innenscheibe angeordnet.
- Die beheizbare Beschichtung ist auf der außenseitigen Oberfläche der Innenscheibe aufgebracht und das metallene Element ist auf der innenraumseitigen Oberfläche der Außenscheibe angeordnet.
- Die beheizbare Beschichtung ist auf einer Trägerfolie in der Zwischenschicht angeordnet und das metallene Element auf der unbeschichteten Oberfläche der Trägerfolie angeordnet.

Alternativ kann das metallene Element in der ersten bevorzugten Ausgestaltung direkt auf der beheizbaren Beschichtung angeordnet sein, wodurch der Wärmetransfer besonders effektiv ist. Die Erfinder haben überraschend festgestellt, dass durch den direkten Kontakt auch bei einer leitenden Verbindung zwischen Beschichtung und metallenem Element der Stromfluss und die Heizwirkung nicht nennenswert negativ beeinflusst werden. Der Grund ist, dass übliche beheizbare Beschichtungen als oberste Schicht eine dielektrische, elektrisch nicht leitfähige Schicht aufweisen. Diese dielektrische Deckschicht scheint ausreichend zu sein, um die leitfähigen Schichten der Beschichtung und das metallene Element elektrisch voneinander zu isolieren. Das metallene Element kann optional mit einer elektrisch isolierenden Beschichtung versehen sein, um eine Stromleitung zu unterbinden, beispielsweise mittels eines Klarlacks. Insbesondere können folgende Anordnungen gewählt werden:
- Die beheizbare Beschichtung ist auf der innenraumseitigen Oberfläche der Außenscheibe aufgebracht und das metallene Element ist ebenfalls auf der innenraumseitigen Oberfläche der Außenscheibe angeordnet.
- Die beheizbare Beschichtung ist auf der außenseitigen Oberfläche der Innenscheibe aufgebracht und das metallene Element ist ebenfalls auf der außenseitigen Oberfläche der Innenscheibe angeordnet.
- Die beheizbare Beschichtung ist auf einer Trägerfolie in der Zwischenschicht angeordnet und das metallene Element auf der beschichteten Oberfläche der Trägerfolie angeordnet.

In einer zweiten bevorzugten Ausgestaltung ist das metallene Element auf der innenraumseitigen Oberfläche der Innenscheibe angeordnet (Seite IV). Die Wärmeübertragung erfolgt dann zumindest über die Innenscheibe hinweg. Die Erfinder haben erkannt, dass auch in dieser Konfiguration die Wärmeübertragung ausreichend ist. Auch diese Ausgestaltung ist für Folien und Bleche als metallisches Element geeignet, aber auch Gussteile. Sie ist für Bleche und Gussteile als metallisches Element besonders bevorzugt, weil diese sich weniger gut einlaminieren lassen als Folien, aber auf einer Außenfläche aufgebracht eine höhere Stabilität aufweisen als Folien. Insbesondere können auch ohnehin vorhandene Elemente bei geeigneter Positionierung als erfindungsgemäßes metallenes Element verwendet werden. Beispiele für solche Elemente sind Halterungen, sogenannte *Brackets,* für Sensoren, Kameras oder den Rückspiegel, die typischerweise aus Metallblechen oder Gussteilen gefertigt sind.

Der Zweck der Erfindung wird natürlich gleichermaßen durch ein auf der außenseitigen Oberfläche der Außenscheibe angebrachtes metallenes Element erfüllt (Seite I). Dies ist jedoch nicht bevorzugt, da das metallene Element dann das äußere Erscheinungsbild des Fahrzeugs beeinflussen würde, was für den Endkunden in der Regel nicht akzeptabel ist.

Die Befestigung des metallenen Elements auf der innenraumseitigen Oberfläche der Innenscheibe erfolgt bevorzugt mittels eines Klebstoffs.

Es können auch Teile der Fahrzeugkarossiere als metallenes Element verwendet werden, wenn diese im eingebauten Zustand der Scheibe geeignet positioniert sind.

Wenn das metallene Element als Blech oder Gussteil ausgebildet ist und auf der innenraumseitigen Oberfläche der Innenscheibe aufgebracht ist, ist es in einer vorteilhaften Ausgestaltung mit Kühlrippen ausgebildet. Dadurch kann die Vermeidung von *Hot Spots* optimiert werden.

Das metallene Element ist in einer vorteilhaften Ausgestaltung in einem Bereich der Fahrzeugscheibe angeordnet, der mit einem opaken Abdeckdruck versehen ist. Solche Abdeckdrucke sind für Fahrzeugscheiben außerhalb des zentralen Sichtbereichs üblich, um Anbauteile wie Sensoren zu verdecken oder den Klebstoff, mit dem die Fahrzeugscheibe mit der Karosserie verbunden ist, vor UV-Strahlung zu schützen. Der Abdeckdruck besteht typischerweise aus einem im Siebdruckverfahren aufgebrachten und eingebrannten schwarzen oder dunklen Emaille. Der Abdeckdruck ist außenseitig zum metallenen Element angeordnet, weist also einen geringen Abstand zur äußeren Umgebung auf als das metallene Element. So wird das metallene Element für einen außerhalb des Fahrzeugs befindlichen Betrachter verdeckt und ist von außen nicht sichtbar. Ist das metallene Element in die Fahrzeugscheibe einlaminiert, so ist der Abdeckdruck bevorzugt auf Seite II angeordnet. Ist das metallene Element auf der innenraumseitigen Oberfläche der Innenscheibe angeordnet (Seite IV), so ist der Abdeckdruck bevorzugt auf Seite II, Seite III oder auf Seite IV unterhalb des metallischen Elements angeordnet. Natürlich kann die Fahrzeugscheibe auch zwei Abdeckdrucke aufweisen, zwischen denen sich das metallene Element befindet, so dass es von beiden Seiten verdeckt wird. Ist das metallene Element in die Verbundscheibe einlaminiert, so ist deshalb bevorzugt ein Abdeckdruck außenseitig zum metallenen Element (Seite I oder II) und ein Abdeckdruck innenseitig zum metallenen Element (Seite III oder IV) angeordnet.

Die beheizbare Beschichtung weist mindestens eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Dadurch wird guter Kompromiss zwischen Transparenz und elektrischer Leitfähigkeit der Schicht erreicht. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid.

In einer besonders bevorzugten Ausgestaltung weist die beheizbare Beschichtung mindestens eine elektrisch leitfähige Schicht auf, welche Silber enthält, bevorzugt mindestens 99% Silber. Die Schichtdicke der elektrisch leitfähigen Schicht beträgt bevorzugt von 5 nm bis 50 nm, besonders bevorzugt von 10 nm bis 30 nm. Die Beschichtung weist bevorzugt zwei oder drei dieser leitfähigen Schichten auf, welche durch zumindest eine dielektrische Schicht voneinander getrennt sind. Solche Beschichtungen sind besonders vorteilhaft im Hinblick zum einen auf die Transparenz der Scheibe und zum anderen auf ihre Leitfähigkeit.

Ein rahmenartiger Randbereich der Scheibe ist bevorzugt nicht mit der beheizbaren Beschichtung versehen. Dieser Randbereich wird häufig auch als Randentschichtung (im Falle einer auf eine Scheibe aufgebrachten Beschichtung) oder Rückschnitt (im Falle einer Beschichtung auf einer Trägerfolie) bezeichnet. Dadurch wird sichergestellt, dass die beheizbare Beschichtung keinen Kontakt zur umgebenden Atmosphäre hat, wodurch Korrosion verhindert wird - die Beschichtung ist gleichsam in der Zwischenschicht eingekapselt. Die Breite des beschichtungsfreien Randbereichs beträgt typischerweise von 0,5 mm bis 20 mm, insbesondere von 1 mm bis 10 mm. Der optisch auffällige Übergang von beschichtetem und unbeschichtetem Bereich ist typischerweise durch einen opaken Abdeckdruck verdeckt.

Die Stromsammelschienen können als aufgedruckte und eingebrannte Paste, insbesondere Siebdruckpaste ausgebildet sein oder als Streifen einer elektrisch leitfähigen Folie. Ist die beheizbare Beschichtung auf einer Scheibenoberfläche aufgebracht, so sind beide Varianten geeignet. Ist die beheizbare Beschichtung auf einer Trägerfolie in der Zwischenschicht aufgebracht, so ist insbesondere eine elektrisch leitfähige Folie geeignet. Die eingebrannte Paste enthält zumindest Metallpartikel, bevorzugt Silberpartikel und Glasfritten. Die Schichtdicke der aufgedruckten Stromsammelschienen beträgt bevorzugt von 5 µm bis 40 µm, besonders bevorzugt von 10 µm bis 20 µm. Aufgedruckte Stromsammelschienen mit diesen Dicken sind technisch einfach zu realisieren und weisen eine vorteilhafte Stromtragfähigkeit auf. Die elektrisch leitfähige Folie enthält bevorzugt Aluminium, Kupfer, verzinntes Kupfer, Gold, Silber, Zink, Wolfram und/oder Zinn oder Legierungen davon, besonders bevorzugt Kupfer. Die Dicke der elektrisch leitfähigen Folie beträgt bevorzugt von 10 µm bis 500 µm, besonders bevorzugt von 30 µm bis 200 µm, beispielsweise 50 µm oder 100 µm. Stromsammelschienen aus elektrisch leitfähigen Folien mit diesen Dicken sind technisch einfach zu realisieren und weisen eine vorteilhafte Stromtragfähigkeit auf. Die elektrisch leitfähige Folie kann direkt, über eine Lotmasse oder einen elektrisch leitfähigen Kleber mit der heizbaren Beschichtung elektrisch leitend verbunden sein. Zur Verbesserung der leitenden Verbindung kann zwischen leitfähiger Beschichtung und Stromsammelschiene beispielsweise eine silberhaltige Paste angeordnet werden.

Die Stromsammelschienen sind typischerweise entlang zweier gegenüberliegender Seitenkante der Fahrzeugscheibe angeordnet, üblicherweise entlang der Oberkante und der Unterkante. Die Bezeichnungen Oberkante und Unterkante beziehen sich hier auf die Ausrichtung in Einbaulage der Fahrzeugscheibe. Die Stromsammelschienen weisen einen geringen Abstand zu der besagten Seitenkante auf (der mittlere Abstand zur besagten Seitenkante ist geringer als zu allen anderen Seitenkanten) und ihre Erstreckungsrichtung folgt im Wesentlichen der Richtung der Seitenkante.

Die Länge der Stromsammelschienen hängt von der Gestaltung der Fahrzeugscheiben ab, insbesondere von der Länge der Kante, entlang derer die Stromsammelschiene angeordnet ist, und kann vom Fachmann im Einzelfall geeignet gewählt werden. Unter der Länge der typischerweise streifenartigen Stromsammelschienen wird ihre längere Dimension verstanden, die sich im Wesentlichen senkrecht zur Stromausbreitungsrichtung erstreckt. Die Breite der Stromsammelschienen beträgt bevorzugt von 1 mm bis 20 mm, bevorzugt von 2 mm bis 10 mm, wodurch eine gute Heizleistung erreicht werden kann.

Die Innenscheibe und die Außenscheibe bestehen bevorzugt aus Glas, besonders bevorzugt Kalk-Natron-Glas, was sich für Fenstergläser bewährt hat. Die Scheiben können aber auch aus anderen Glassorten bestehen, beispielsweise Borosilikatglas oder Aluminosilikatglas. Die Scheiben können grundsätzlich alternativ aus Kunststoff gefertigt sein, insbesondere Polycarbonat (PC) oder Polymethylmethacrylat (PMMA).

Die Dicke der Scheiben kann breit variieren und so hervorragend den Erfordernissen im Einzelfall angepasst werden. Vorzugsweise betragen die Dicken der Außenscheibe und der Innenscheibe von 0,5 mm bis 10 mm, besonders bevorzugt von 1 mm bis 5 mm, ganz besonders bevorzugt von 1,2 mm bis 3 mm.

Die Außenscheibe, die Innenscheibe oder die Zwischenschicht können klar und farblos, aber auch getönt, getrübt oder gefärbt sein. Die Gesamttransmission durch das Verbundglas beträgt in einer bevorzugten Ausgestaltung größer 70%, insbesondere wenn das Verbundglas eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheibe können aus nicht vorgespanntem, teilvorgespanntem oder vorgespanntem Glas bestehen.

Die Fahrzeugscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Die Zwischenschicht wird bevorzugt durch mindestens eine thermoplastische Folie ausgebildet. Die thermoplastische Folie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke einer thermoplastischen Folie beträgt bevorzugt von 0,2 mm bis 2 mm, besonders bevorzugt von 0,3 mm bis 1 mm, beispielsweise 0,38 mm oder 0,76 mm.

Ist die beheizbare Beschichtung auf einer Trägerfolie angeordnet, so ist diese Trägerfolie bevorzugt zwischen zwei thermoplastischen Folien angeordnet. Die Zwischenschicht umfasst dann zumindest zwei thermoplastische Verbindungsfolien und eine dazwischen angeordnete Trägerfolie mit elektrisch beheizbarer Beschichtung.

Die Trägerfolie enthält bevorzugt zumindest Polyethylenterephthalat (PET), Polyethylen (PE) oder Gemische oder Copolymere oder Derivate davon. Das ist besonders vorteilhaft für die Handhabung die Stabilität und die optische Eigenschaften der Trägerfolie. Die Trägerfolie weist bevorzugt eine Dicke von 5 µm bis 500 µm, besonders bevorzugt von 10 µm bis 200 µm und ganz besonders bevorzugt von 12 µm bis 75 µm. Trägerfolien mit diesen Dicken lassen sich vorteilhaft in Form von flexiblen und gleichzeitig stabilen Folien bereitstellen, dies sich gut handhaben lassen.

Die Erfindung umfasst außerdem ein Verfahren zur Herstellung einer beheizbaren laminierten Fahrzeugscheibe zur Abtrennung eines Fahrzeuginnenraums von einer äußeren Umgebung. Das Verfahren umfasst mindestens die folgenden Verfahrensschritte:
(a) Bereitstellen einer Außenscheibe, einer thermoplastischen Zwischenschicht und einer Innenscheibe, wobei die Außenscheibe, die Innenscheibe oder die Zwischenschicht mit einer elektrisch beheizbaren Beschichtung versehen ist,
(b) Verbinden der beheizbaren Beschichtung mit mindestens zwei zum elektrischen Verbinden mit den beiden Polen einer Spannungsquelle vorgesehenen Stromsammelschienen, so dass durch Anlegen einer Speisespannung ein Heizstrom über ein zwischen den mindestens zwei Stromsammelschienen gebildetes Heizfeld fließt,
(c) die Außenscheibe und die Innenscheibe durch Lamination über die Zwischenschicht miteinander verbunden werden,
wobei vor oder nach der Lamination mindestens ein metallenes Element so auf oder in der Fahrzeugscheibe angeordnet wird, dass Wärme aus einer Region des Heizfelds mit erhöhter Wärmeerzeugung mittels Wärmeleitung des metallenen Elements abgeführt wird.

Wird die beheizbare Beschichtung auf eine Oberfläche einer der Scheiben aufgebracht, so wird der Stapel zur Lamination bevorzugt so angeordnet, dass die Beschichtung der Zwischenschicht zugewandt ist. Die Zwischenschicht wird in Form zumindest einer Folie bereitgestellt. Wird die Beschichtung auf einer Trägerfolie bereitgestellt, so wird diese Trägerfolie zur Lamination bevorzugt zwischen einer ersten thermoplastischen Folie und einer zweiten thermoplastischen Folie angeordnet. Die thermoplastischen Folien bilden zusammen mit der Trägerfolie die Zwischenschicht.

Die beheizbare Beschichtung wird mittels an sich bekannter Verfahren aufgebracht. Bevorzugt erfolgt das Beschichten durch magnetfeldunterstützte Kathodenzerstäubung (Sputtern). Das ist besonders vorteilhaft im Hinblick auf eine einfache, schnelle, kostengünstige und gleichmäßige Beschichtung des Substrats. Trägerfolien mit beheizbaren Beschichtungen sind auch kommerziell erhältlich, so dass die beschichtete Trägerfolie nicht eigens hergestellt werden muss.

Das Anbringen der Stromsammelschienen kann insbesondere durch Auflegen, Aufdrucken, Löten oder Kleben erfolgen.

Soll die Fahrzeugscheibe gebogen sein, so werden die Außenscheibe und die Innenscheibe bevorzugt vor der Lamination einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Das Biegen erfolgt bevorzugt nach dem Aufbringen der beheizbaren Beschichtung auf eine der Scheiben, weil das Beschichten einer planen Scheibe technisch einfacher ist und zudem die optischen Eigenschaften der Beschichtung durch das Erwärmen beim Biegen verbessert werden, ohne das ein separater Temperschritt erforderlich ist.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und / oder Druck.

Soll das metallene Element in die Fahrzeugscheibe einlaminiert werden, so wird es an geeigneter Stelle in den Stapel zur Lamination eingelegt, beispielsweise zwischen Zwischenschicht und Außen- oder Innenscheibe oder zwischen zwei Folien der Zwischenschicht. Das metallene Element kann dabei direkt auf der beheizbaren Beschichtung angeordnet werden oder von dieser getrennt durch mindestens eine Folie der Zwischenschicht. Das metallene Element kann optional an einer der Scheiben oder einer Folie der Zwischenschicht fixiert werden, beispielsweise durch Kleben, so dass es nicht verrutschen kann. Soll das metallene Element auf der innenraumseitigen Oberfläche der Innenscheibe angebracht werden, so wird es bevorzugt an der Oberfläche angeklebt.

Gezeigt ist die Verwendung eines metallenen Elements in einer beheizbaren laminierten Fahrzeugscheibe zur Abführung von Wärme aus einer Region des Heizfelds mit erhöhter Wärmeerzeugung mittels Wärmeleitung.

Die Erfindung umfasst weiterhin die Verwendung der erfindungsgemäßen Fahrzeugscheibe in Fortbewegungsmitteln für den Verkehr auf dem Lande, in der Luft oder zu Wasser, bevorzugt in Kraftfahrzeugen und insbesondere als Windschutzscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung der erfindungsgemäßen Fahrzeugscheibe,
- Fig. 2: einen Querschnitt entlang A-A' durch die Fahrzeugscheibe nach Figur 1,
- Fig. 3: einen Querschnitt entlang A-A' durch eine weitere Ausgestaltung der der erfindungsgemäßen Fahrzeugscheibe,
- Fig. 4: einen Querschnitt entlang A-A' durch eine weitere Ausgestaltung der der erfindungsgemäßen Fahrzeugscheibe,
- Fig. 5: eine Draufsicht auf eine weitere Ausgestaltung der erfindungsgemäßen Fahrzeugscheibe,
- Fig. 6: ein Flussdiagramm einer Ausführungsform des erfindungsgemäßen Verfahrens und
- Fig. 7: ein Flussdiagramm einer weiteren Ausführungsform des erfindungsgemäßen Verfahrens.

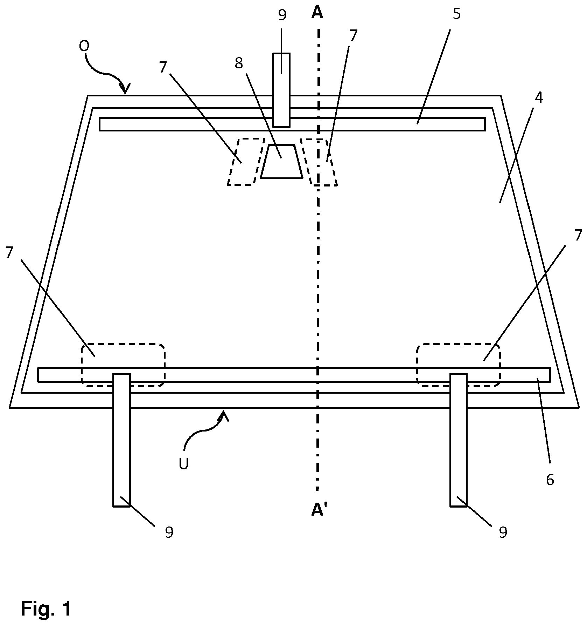

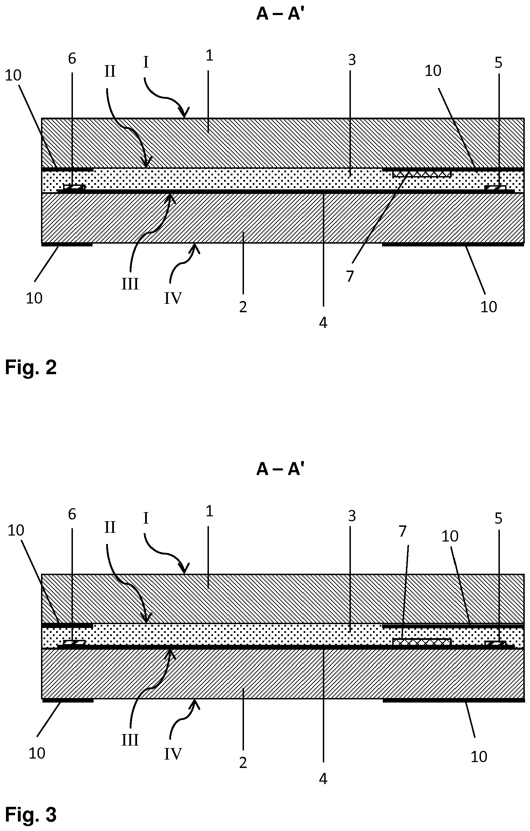

Fig. 1 und Fig. 2 zeigen je ein Detail einer erfindungsgemäßen Fahrzeugscheibe. Die Fahrzeugscheibe ist die Windschutzscheibe eines Personenkraftwagens und ist als Verbundglas aus einer Außenscheibe 1 und einer Innenscheibe 2 ausgebildet, die über eine thermoplastische Zwischenschicht 3 miteinander verbunden sind. Die Außenscheibe 1 und die Innenscheibe 2 bestehen aus Natron-Kalk-Glas und weisen eine Dicke von beispielsweise 2,1 mm auf. Die Zwischenschicht 3 ist aus einer PVB-Folie mit einer Dicke von 0,76 mm gebildet.

Auf der außenseitigen Oberfläche III der Innenscheibe 2 ist eine beheizbare Beschichtung 4 aufgebracht. Die beheizbare Beschichtung 4 ist beispielsweise ein Stapel mehrerer Schichten, der drei leitfähige Silberschichten enthält, die durch mehrere dielektrische Schichten von einander getrennt sind. Die beheizbare Beschichtung ist transparent, so dass die Durchsicht durch die Scheibe nicht in einem Maße beeinträchtigt wird, das die Scheibe ungeeignet als Windschutzscheibe machen würde. Auf der beheizbaren Beschichtung 4 sind zu ihrer elektrischen Kontaktierung zwei Stromsammelschienen 5, 6 aufgebracht. Die Stromsammelschienen 5, 6 sind als etwa 5 mm breite Streifen einer aufgedruckten und eingebrannten Siebdruckpaste mit Silberpartikeln und Glasfritten ausgebildet. Die erste Stromsammelschiene 5 ist entlang und in der Nähe der Oberkante O der Fahrzeugscheibe angeordnet, die zweite Stromsammelschiene 6 entlang und in der Nähre der Unterkante U. In Einbaulage der Windschutzscheibe weist die Oberkante O nach oben (Dachkante) und die Unterkante U nach unten zum Erdboden (Motorkante). Die Stromsammelschienen 5, 6 ihrerseits sind mit Zuleitungen 9 elektrisch kontaktiert, über welche die Verbindung der Stromsammelschienen 5, 6 zu den Polen einer externen Spannungsquelle realisiert ist. Die Zuleitungen 9 sind oder enthalten eine leitfähige Kupferfolie, die auf einen Bereich der Stromsammelschiene 5, 6 aufgelegt und optional verlötet ist. Die zweite Stromsammelschiene 6 entlang der Unterkante U ist durch zwei solcher Zuleitungen 9 kontaktiert.

Durch die Stromsammelschienen 5, 6 wird der Strom nicht punktuell, sondern über die Breite der Stromsammelschienen 5, 6 verteilt in die Beschichtung 4 eingeleitet. Der Strom fließt durch die Beschichtung 4 im Bereich zwischen den Stromsammelschienen 5, 6, wodurch sich dieser Bereich erwärmt und ein Heizfeld ausgebildet wird, das den zentralen Sichtbereich der Scheibe abdeckt. Der Sichtbereich kann so bei Bedarf bequem von Vereisung oder Feuchtigkeit befreit werden.

Die Beschichtung 4 ist vollflächig auf die Oberfläche III aufgebracht, mit Ausnahme eines umlaufenden Randbereichs mit einer Breite von 10 mm und eines Kommunikationsfensters 8. Das Kommunikationsfenster 8 ist im Heizfeld zwischen den Stromsammelschienen 5, 6 in der Nähe oberen Stromsammelschiene 5 angeordnet und ist ein beschichtungsfreier Bereich. Das Kommunikationsfenster gewährleistet die Transmission von elektromagnetischer Strahlung durch die Fahrzeugscheibe, die sonst durch die Beschichtung 4 reflektiert würde. So kann beispielsweise ein an der Innenscheibe 2 angebrachter Sensor funktionieren oder der Funkdatenverkehr im Fahrzeuginneren.

Die Heizleistung einer solchen Scheibe ist nicht über das gesamte Heizfeld homogen. Stattdessen liegen typischerweise Bereich mit erhöhter Wärmeerzeugung vor und Bereich mit geringerer Wärmeerzeugung. Die Bereiche mit erhöhter Wärmeerzeugung (*Hot Spots*) können im schlimmsten Fall zu Verbrennungen führen, wenn die Scheibe durch eine Person berührt wird, oder sogar zu Beschädigungen der Scheibe. Ziel der vorliegenden Erfindung ist es daher, die Bereiche erhöhter Wärmeerzeugung zu vermeiden und die Homogenität der Heizleitung zu verbessern.

Ein Bereich mit erhöhter Wärmeerzeugung entwickelt sich in der Umgebung der Kontaktstellen zwischen Zuleitungen 9 und Stromsammelschienen 5, 6. Ein überproportionaler Anteil des elektrischen Stromflusses in die Beschichtung 4 erfolgt nämlich an diesen Kontaktstellen.

Um die Wärme aus den Bereichen erhöhter Wärmeerzeugung abzuleiten, weist die Fahrzeugscheibe metallene Elemente 7 auf. Die metallenen Elemente 7 sind als etwa 50 µm dicke Kupferfolie ausgebildet und in die Fahrzeugscheibe einlaminiert, wobei sie auf der innenraumseitigen Oberfläche II der Außenscheibe 1 angeordnet sind, also zwischen Außenscheibe 1 und thermoplastischer Zwischenschicht 3. Jeder Kontaktstelle zwischen der unteren Stromsammelschiene 6 und den Zuleitungen 9 ist ein solches metallenes Element zugeordnet, das mit der Kontaktstelle überlappend angeordnet ist und sich von dort aus einige Zentimeter in Richtung der Scheibenmitte erstreckt. Die Projektion des metallenen Elements 7 auf die Beschichtung 4 ergibt einen Flächenabschnitt, welcher den Bereich erhöhter Wärmeerzeugung enthält und auch Bereich mit demgegenüber geringerer Wärmeerzeugung. Das metallene Element 7 ist wärmeleitend. Es erwärmt sich in dem Bereich erhöhter Wärmeerzeugung und leitet die Wärme ab in die Regionen geringerer Wärmeerzeugung. Die Wärmeverteilung wird dadurch homogenisiert und ein gefährlicher *Hot Spot* im Bereich der Zuleitungen 9 vermieden. Im Bereich der Kontaktstelle zwischen der oberen Stromsammelschiene 5 und ihrer Zuleitung 9 kann natürlich ebenfalls ein metallenes Element 7 angeordnet sein, das in der Figur aus Gründen der Übersichtlichkeit nicht dargestellt ist.

Weitere Bereiche erhöhter Wärmeerzeugung treten in Zusammenhang mit dem Kommunikationsfenster 8 auf. Da der Strom das Kommunikationsfenster 8 seitlich umfließen muss, konzentriert sich der Stromfluss angrenzend an die seitlichen Ränder des Kommunikationsfensters 8, wo sich *Hot Spots* ausbilden. Darum ist in Stromflussrichtung seitlich des Kommunikationsfensters 8 beiderseits ein weiteres metallenes Element 7 angeordnet. Die metallenen Elemente 7 weisen einen Abstand von einige wenigen Millimetern zum Kommunikationsfenster 8 auf und erstrecken sich einige Zentimeter vom Kommunikationsfenster 8 hinweg. Durch die metallenen Elemente 7 kann somit die überschüssige Wärme aus der Umgebung des Kommunikationsfensters 8 abgeleitet werden, wodurch der *Hot Spot* vermieden wird.

Die metallenen Elemente wie auch die Stromsammelschienen 5, 6 sind in Bereichen der Fahrzeugscheibe angeordnet, die mit einem opaken Abdeckdruck 10 versehen sind. Der Abdeckdruck 10 ist in der Figur 1 der Übersichtlichkeit halber nicht dargestellt. Er verläuft entlang der Scheibenrands mit einer Breite von etwa 10 cm, außerdem um das Kommunikationsfenster 8. Der Abdeckdruck 10 ist auf der Oberfläche II und der Oberfläche IV aufgebracht. Die einlaminierten metallenen Elemente 7 sind dadurch beidseitig verdeckt und werden von einem Betrachter nicht als störend wahrgenommen.

Fig. 3 zeigt einen Schnitt durch eine alternative Ausgestaltung der erfindungsgemäßen Fahrzeugscheibe. Sie unterscheidet sich von der vorstehend beschrieben dadurch, dass das metallene Element 7 (Kupferfolie) auf der außenseitigen Oberfläche III der Innenscheibe 2 angeordnet ist und damit direkt auf der beheizbaren Beschichtung 4. Da die oberste Schicht der Beschichtung 4 eine dielektrische Si₃N₄-Schicht ist, wird die Heizfunktion der Beschichtung 4 nicht negativ beeinträchtigt, obwohl das metallene Element 7 elektrisch leitfähig ist. Das metallene Element 7 kann also ohne besondere Vorsichtsmaßnahmen einfach auf die Beschichtung 4 aufgelegt werden. Optional kann das metallene Element 7 auch eine isolierende Beschichtung aufweisen, beispielsweise einen Klarlack.

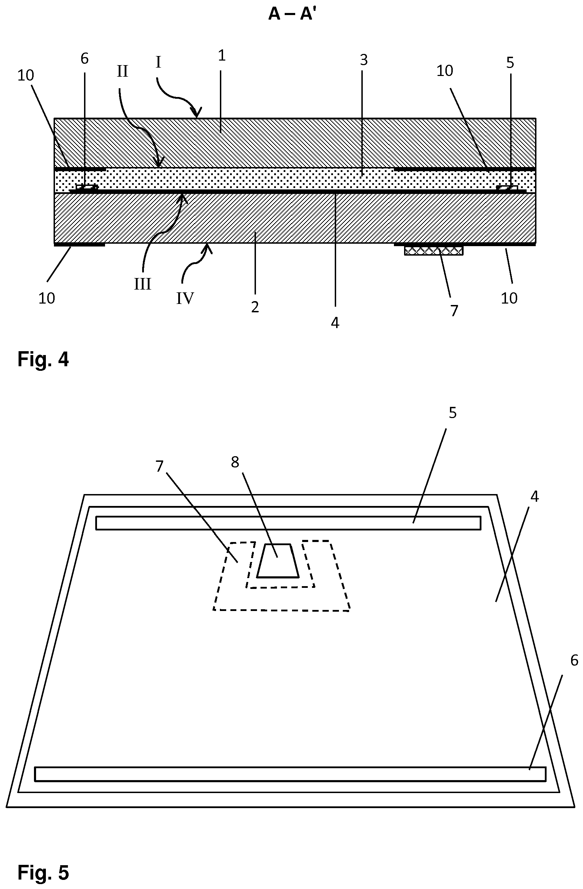

Fig. 4 zeigt einen Schnitt durch eine weitere Ausgestaltung der erfindungsgemäßen Fahrzeugscheibe. Das metallene Element 7 ist auf die innenraumseitige Oberfläche IV der Innenscheibe 2 aufgeklebt. Das metallene Element 7 ist als Aluminium-Stahlblech ausgebildet mit einer Dicke von etwa 7 mm. Die wärmeleitende Wirkung des metallenen Elements 7 wirkt auch durch die Innenscheibe 2 hindurch, so dass auch diese Anordnung wirkungsvoll ist. Das metallene Element 7 kann ein eigens für diesen Zweck angebrachtes Blech sein. Es kann aber auch ein ohnehin vorhandene Bauteil als metallenes Element 7 verwendet werden, insbesondere die Halterung des Sensors, der hinter dem Kommunikationsfenster 8 angeordnet ist und dessen Funktionalität das Kommunikationsfenster 8 gewährleistet.

Fig. 5 zeigt eine Draufsicht auf eine weitere Ausgestaltung der erfindungsgemäßen Fahrzeugscheibe. Auch hier ist dem Kommunikationsfenster 8 ein metallenes Element 7 zugeordnet, um *Hot Spots* zu vermeiden. Im Unterschied zur Ausgestaltung der Figur 1 ist das metallene Element 7 nicht nur seitlich des Kommunikationsfensters 8 angeordnet, sondern erstreckt sich auch entlang der der nächstliegenden Stromsammelschiene 5 abgewandten Kante des Kommunikationsfensters 8, so dass das Kommunikationsfenster 8 von drei Seiten von dem metallenen Element 7 umgeben ist. Durch diese Ausgestaltung wird die überschüssige Wärme, die seitlich des Kommunikationsfensters 8 erzeugt wird, teilweise in den Bereich unterhalb des Kommunikationsfensters 8 geleitet. Dieser Bereich wird durch das Kommunikationsfenster 8 elektrisch "abgeschattet", so dass hier nur eine geringe Wärmeerzeugung vorliegt. Das metallene Element 7 trägt wesentlich zur Homogenisierung des Wärmeprofils bei, indem es die Wärme aus dem *Hot Spot* gezielt in eine Region leitet, in der eine verbesserte Heizwirkung erforderlich ist.

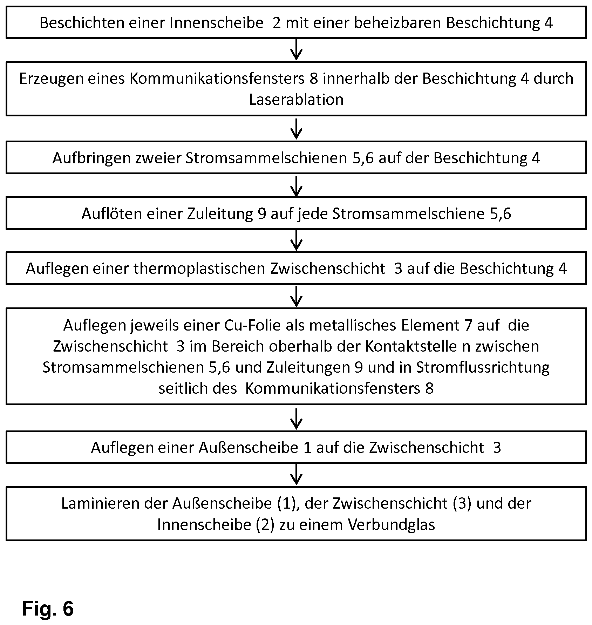

Fig. 6 zeigt ein Flussdiagramm eines Ausführungsbeispiels des erfindungsgemäßen Verfahrens zur Herstellung einer beheizbaren laminierten Fahrzeugscheibe gemäß Figur 2.

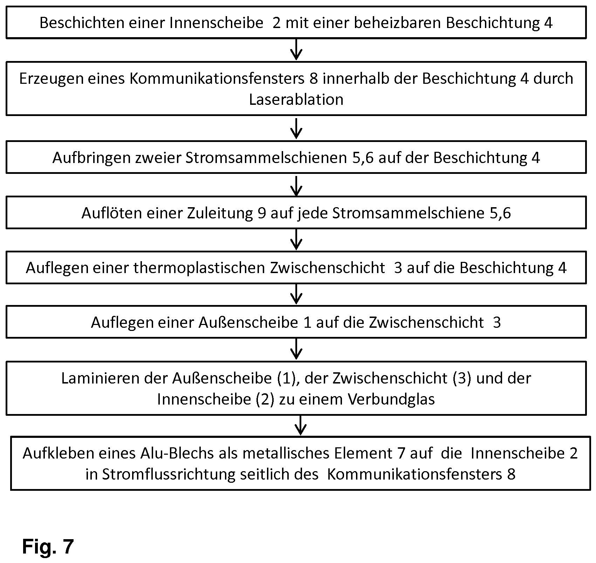

Fig. 7 zeigt ein Flussdiagramm eines weiteren Ausführungsbeispiels des erfindungsgemäßen Verfahrens gemäß Figur 4.

### Beispiele

Es wurden verschiedene Windschutzscheiben mit beheizbarer Beschichtung und einem Kommunikationsfenster 8 untersucht. Nach 12 Minuten Heizwirkung wurde eine Thermographie aufgenommen und die Maximaltemperatur Tₘₐₓ auf der Scheibe bestimmt (*Hot Spot*). Als Bezugssystem 1 diente eine Scheibe ohne metallenes Element 7. In den erfindungsgemäßen Beispielen wurde die überschüssige Wärme aus dem *Hot Spot* in der Umgebung des Kommunikationsfensters abgeleitet durch unterschiedliche metallene Elemente 7: eine einlaminierte Folie aus Aluminium, eine einlaminierte Folie aus Kupfer und eine auf Seite IV aufgeklebtes sogenanntes "Bracket" (Befestigungsvorrichtung für Anbauteile) aus Gusseisen. Die Messwerte sind in Tabelle 1 zusammengefasst, wobei □T die Differenz der Maximaltemperatur zum Bezugssystem 1 bezeichnet.

**Tabelle 1**

| | **metallenes Element 7** | **Tₘₐₓ** | □**T** |
|---|---|---|---|
| 1 | - | 86,1 °C | - |
| 2 | Alu-Folie, einlaminiert | 76,6 °C | - 9,5 °C |
| 3 | Cu-Folie, einlaminiert | 63,0 °C | - 23,1 °C |
| 4 | Gusseisen-Bracket auf Seite IV | 70,2 °C | - 15,9° C |

Der Tabelle ist zu entnehmen, dass alle Ausgestaltungen zu einer signifikanten Erniedrigung der Temperatur am *Hot Spot* führten. Kritische Maximaltemperaturen können sie vermieden werden und die Wärmeverteilung wird homogenisiert. Das sind große Vorteile der Erfindung.

### Bezugszeichenliste:

- (1): Außenscheibe
- (2): Innenscheibe
- (3): thermoplastische Zwischenschicht
- (4): elektrisch leitfähige Beschichtung
- (5): Stromsammelschiene
- (6): Stromsammelschiene
- (7): metallenes Element
- (8): beschichtungsfreier Bereich, Kommunikationsfenster
- (9): Zuleitung zu Stromsammelschiene
- (10): opaker Abdeckdruck

- (O): Oberkante
- (U): Unterkante

- I: außenseitige Oberfläche der Außenscheibe
- II: innenraumseitige Oberfläche der Außenscheibe
- III: außenseitige Oberfläche der Innenscheibe
- IV: innenraumseitige Oberfläche der Innenscheibe

- A-A': Schnittlinie

## Patentansprüche

1. Beheizbare laminierte Fahrzeugscheibe zur Abtrennung eines Fahrzeuginnenraums von einer äußeren Umgebung, umfassend eine Außenscheibe (1) und eine Innenscheibe (2), die über eine thermoplastische Zwischenschicht (3) miteinander verbunden sind, und eine elektrisch beheizbare Beschichtung (4), die mit mindestens zwei zum elektrischen Verbinden mit den beiden Polen einer Spannungsquelle vorgesehenen Stromsammelschienen (5,6) elektrisch so verbunden ist, dass durch Anlegen einer Speisespannung ein Heizstrom über ein zwischen den mindestens zwei Stromsammelschienen (5,6) gebildetes Heizfeld fließt,
wobei die Fahrzeugscheibe mit mindestens einem metallenen Element (7) ausgestattet ist, welches so auf oder in der Fahrzeugscheibe angeordnet ist, dass Wärme aus einer Region des Heizfelds mit erhöhter Wärmeerzeugung mittels Wärmeleitung des metallenen Elements (7) abgeführt wird.

2. Fahrzeugscheibe nach Anspruch 1, wobei das metallene Element (7) eine Folie, ein Blech oder ein Gussteil ist.

3. Fahrzeugscheibe nach Anspruch 1 oder 2, wobei die Projektion des metallenen Elements (7) auf die beheizbare Beschichtung (4) einem Bereich der beheizbaren Beschichtung (4) entspricht, der lokal eine Heizleistung aufweist, die mindestens 15% höher ist als die durchschnittliche Heizleistung des Heizfeldes.

4. Fahrzeugscheibe nach einem der Ansprüche 1 bis 3, die zwischen den Stromsammelschienen (5, 6) einen örtlich begrenzten Bereich (8) aufweist, der frei von der beheizbaren Beschichtung (4) ist, wobei das metallene Element in Stromflussrichtung seitlich des besagten Bereichs (8) angeordnet ist, bevorzugt beidseitig.

5. Fahrzeugscheibe nach einem der Ansprüche 1 bis 3, wobei das metallene Element (7) die Kontaktstelle zwischen einer Stromsammelschiene (5, 6) und einer mit dieser verbundenen elektrischen Zuleitung (9) überlappt.

6. Fahrzeugscheibe nach einem der Ansprüche 1 bis 5, wobei das metallene Element (7) in die Fahrzeugscheibe einlaminiert ist.

7. Fahrzeugscheibe nach Anspruch 6, wobei das metallene Element (7) auf der beheizbaren Beschichtung (4) angeordnet ist und optional eine isolierende Beschichtung aufweist.

8. Fahrzeugscheibe nach Anspruch 6, wobei das metallene Element (7) von der beheizbaren Beschichtung (4) durch Material der Zwischenschicht (3) getrennt ist.

9. Fahrzeugscheibe nach einem der Ansprüche 1 bis 5, wobei das metallene Element (7) auf der innenraumseitigen Oberfläche (IV) der Innenscheibe (2) angeordnet ist.

10. Fahrzeugscheibe nach Anspruch 9, wobei das metallene Element (7) ein Blech oder Gussteil ist, das mit Kühlrippen ausgebildet ist.

11. Fahrzeugscheibe nach einem der Ansprüche 1 bis 10, wobei das metallene Element (7) in einem Bereich der Fahrzeugscheibe angeordnet ist, der mit einem opaken Abdeckdruck (10) versehen ist.

12. Fahrzeugscheibe nach einem der Ansprüche 1 bis 11, wobei die beheizbare Beschichtung (4) auf einer der thermoplastischen Zwischenschicht (3) zugewandten Oberfläche (II, III) der Außenscheibe (1) oder der Innenscheibe (2) angeordnet oder auf einer Trägerfolie innerhalb der Zwischenschicht (3).

13. Fahrzeugscheibe nach einem der Ansprüche 1 bis 12, wobei die Stromsammelschienen (5, 6) als eingebrannte Druckpaste, die bevorzugt Silberpartikel und Glasfritten enthält, oder als Streifen einer elektrisch leitfähigen Folie, die bevorzugt Kupfer enthält, ausgebildet sind.

14. Verfahren zur Herstellung einer beheizbaren laminierten Fahrzeugscheibe zur Abtrennung eines Fahrzeuginnenraums von einer äußeren Umgebung, umfassend
(a) Bereitstellen einer Außenscheibe (1), einer thermoplastischen Zwischenschicht (3) und einer Innenscheibe (2), wobei die Außenscheibe (1), die Innenscheibe (2) oder die Zwischenschicht (3) mit einer elektrisch beheizbaren Beschichtung (4) versehen ist,
(b) Verbinden der beheizbaren Beschichtung (4) mit mindestens zwei zum elektrischen Verbinden mit den beiden Polen einer Spannungsquelle vorgesehenen Stromsammelschienen (5,6), so dass durch Anlegen einer Speisespannung ein Heizstrom über ein zwischen den mindestens zwei Stromsammelschienen (5,6) gebildetes Heizfeld fließt,
(c) die Außenscheibe (1) und die Innenscheibe (2) durch Lamination über die Zwischenschicht (3) miteinander verbunden werden,
wobei vor oder nach der Lamination mindestens ein metallenes Element (7) so auf oder in der Fahrzeugscheibe angeordnet wird, dass Wärme aus einer Region des Heizfelds mit erhöhter Wärmeerzeugung mittels Wärmeleitung des metallenen Elements (7) abgeführt wird.

15. Verwendung einer Fahrzeugscheibe nach einem der Ansprüche 1 bis 13 in Fortbewegungsmitteln für den Verkehr auf dem Lande, in der Luft oder zu Wasser, bevorzugt in Kraftfahrzeugen und insbesondere als Windschutzscheibe.

## Claims

1. Heatable laminated vehicle window for separating a vehicle interior from an outer surrounding area, comprising an outer pane (1) and an inner pane (2) that are bonded to one another via a thermoplastic intermediate layer (3) and an electrically heatable coating (4) that is electrically connected to at least two busbars (5,6) provided for electrical connecting to the two poles of a voltage source such that by applying a supply voltage, a heating current flows via a heating field formed between the at least two busbars (5,6),
wherein the vehicle window is equipped with at least one metal element (7) that is arranged on or in the vehicle window such that heat is dissipated out of a region of the heating field with elevated heat generation by means of thermal conduction of the metal element (7).

2. Vehicle window according to claim 1, wherein the metal element (7) is a foil, a sheet, or a cast part.

3. Vehicle window according to claim 1 or 2, wherein the projection of the metal element (7) onto the heatable coating (4) corresponds to a region of the heatable coating (4), which has, locally, a heating power that is at least 15% higher than the average heating power of the heating field.

4. Vehicle window according to one of claims 1 through 3, which has, between the busbars (5, 6), a locally limited region (8), which is free of the heatable coating (4), wherein the metal element is arranged next to the side of said region (8) in the direction of flow of the current, preferably on both sides.

5. Vehicle window according to one of claims 1 through 3, wherein the metal element (7) overlaps the contact point between a busbar (5, 6) and a supply line (9) connected thereto.

6. Vehicle window according to one of claims 1 through 5, wherein the metal element (7) is laminated into the vehicle window.

7. Vehicle window according to claim 6, wherein the metal element (7) is arranged on the heatable coating (4) and, optionally, has an insulating coating.

8. Vehicle window according to claim 6, wherein the metal element (7) is separated from the heatable coating (4) by material of the intermediate layer (3).

9. Vehicle window according to one of claims 1 through 5, wherein the metal element (7) is arranged on the interior-side surface (IV) of the inner pane (2).

10. Vehicle window according to claim 9, wherein the metal element (7) is a sheet or a cast part that is designed with cooling ribs.

11. Vehicle window according to one of claims 1 through 10, wherein the metal element (7) is arranged in a region of the vehicle window that is provided with an opaque masking print (10).

12. Vehicle window according to one of claims 1 through 11, wherein the heatable coating (4) is arranged on a surface (II, III) of the outer pane (1) or the inner pane (2) facing the thermoplastic intermediate layer (3) or on a carrier film within the intermediate layer (3).

13. Vehicle window according to one of claims 1 through 12, wherein the busbars (5, 6) are implemented as fired printing paste, which preferably contains silver particles and glass frits, or as a strip of an electrically conductive foil, which preferably contains copper.

14. Method for producing a heatable laminated vehicle window for separating a vehicle interior from an outer surrounding area, comprising
(a) Preparing an outer pane (1), a thermoplastic intermediate layer (3), and an inner pane (2), wherein the outer pane (1), the inner pane (2), or the intermediate layer (3) is provided with an electrically heatable coating (4),
(b) Connecting the heatable coating (4) to at least two busbars (5,6) provided for electrical connecting to the two poles of a voltage source such that by applying a supply voltage, a heating current flows via a heating field formed between the at least two busbars (5,6),
(c) The outer pane (1) and the inner pane (2) are bonded to one another via the intermediate layer (3) by lamination,
wherein before or after lamination, at least one metal element (7) is arranged on or in the vehicle window such that heat is dissipated out of a region of the heating field with elevated heat generation by means of thermal conduction of the metal element (7).

15. Use of a vehicle window according to one of claims 1 through 13 in means of transportation for travel on land, in the air, or on water, preferably in motor vehicles, and, in particular, as a windshield.

## Revendications

1. Vitre de véhicule, feuilletée, chauffante, pour la séparation d'un espace intérieur de véhicule vis-à-vis d'un environnement extérieur, comportant une plaque externe (1) et une plaque interne (2), qui sont reliées l'une à l'autre par une couche intermédiaire thermoplastique (3), et un revêtement (4) apte à être chauffé électriquement, qui est relié électriquement avec au moins deux barres omnibus (5, 6) prévues pour la connexion électrique avec au moins deux pôles d'une source de tension, de telle sorte que, par l'application d'une tension d'alimentation, un courant de chauffage circule via un champ chauffant formé entre lesdites au moins deux barres omnibus (5, 6),
dans lequel la vitre de véhicule est équipée d'au moins un élément métallique (7), lequel est disposé sur ou dans la vitre de véhicule de telle sorte que de la chaleur est dissipée hors d'une région du champ chauffant avec une génération de chaleur accrue au moyen d'une conduction thermique de l'élément métallique (7).

2. Vitre de véhicule selon la revendication 1, dans laquelle l'élément métallique (7) est une feuille, une tôle ou une pièce coulée.

3. Vitre de véhicule selon l'une des revendications 1 ou 2, dans laquelle la projection de l'élément métallique (7) sur le revêtement chauffant (4) correspond à une région du revêtement chauffant (4) qui présente localement une puissance de chauffage qui est d'au moins 15 % supérieure à la puissance de chauffage moyenne du champ chauffant.

4. Vitre de véhicule selon l'une des revendications 1 à 3, qui présente entre les barres omnibus (5, 6) une région limitée localement (8) qui est exempte du revêtement chauffant (4), l'élément métallique étant disposé latéralement à ladite région (8) dans le sens du flux de courant, de préférence des deux côtés.

5. Vitre de véhicule selon l'une des revendications 1 à 3, dans laquelle l'élément métallique (7) chevauche l'emplacement de contact entre une barre omnibus (5, 6) et une ligne d'alimentation électrique (9) connectée à celle-ci.

6. Vitre de véhicule selon l'une des revendications 1 à 5, dans laquelle l'élément métallique (7) est intégré par feuilletage dans la vitre de véhicule.

7. Vitre de véhicule selon la revendication 6, dans laquelle l'élément métallique (7) est disposé sur le revêtement chauffant (4) et présente facultativement un revêtement isolant.

8. Vitre de véhicule selon la revendication 6, dans laquelle l'élément métallique (7) est séparé du revêtement chauffant (4) par de la matière de la couche intermédiaire (3).

9. Vitre de véhicule selon l'une des revendications 1 à 5, dans laquelle l'élément métallique (7) est disposé sur la surface côté espace intérieur (IV) de la plaque interne (2).

10. Vitre de véhicule selon la revendication 9, dans laquelle l'élément métallique (7) est une tôle ou une pièce coulée, qui comporte des nervures de refroidissement.

11. Vitre de véhicule selon l'une des revendications 1 à 10, dans laquelle l'élément métallique (7) est disposé dans une région de la vitre de véhicule qui est dotée d'une impression de masquage opaque (10).

12. Vitre de véhicule selon l'une des revendications 1 à 11, dans laquelle le revêtement chauffant (4) est disposé sur une surface (II, III) de la plaque externe (1) ou de la plaque interne (2) tournée vers la couche intermédiaire thermoplastique (3) ou sur une feuille de support à l'intérieur de la couche intermédiaire (3).

13. Vitre de véhicule selon l'une des revendications 1 à 12, dans laquelle les barres omnibus (5, 6) sont formées en tant que pâte d'impression cuite, qui contient de préférence des particules d'argent et des frittes de verre, ou en tant que bandes d'une feuille conductrice de l'électricité, qui contient de préférence du cuivre.

14. Procédé de fabrication d'une vitre de véhicule feuilletée, chauffante, pour la séparation d'un espace intérieur de véhicule vis-à-vis d'un environnement extérieur, comprenant :
(a) préparation d'une plaque externe (1), d'une couche intermédiaire thermoplastique (3) et d'une plaque interne (2), la plaque externe (1), la plaque interne (2) ou la couche intermédiaire (3) étant dotée d'un revêtement (4) apte à être chauffé électriquement ;
(b) connexion du revêtement chauffant (4) à au moins deux barres omnibus (5, 6) prévues pour la connexion électrique avec les deux pôles d'une source de tension, de telle sorte que, par l'application d'une tension d'alimentation, un courant de chauffage circule via un champ de chauffage formé entre lesdites au moins deux barres omnibus (5, 6) ;
(c) la plaque externe (1) et la plaque interne (2) SONT reliées l'une à l'autre par feuilletage avec la couche intermédiaire (3),
dans lequel avant ou après le feuilletage, au moins un élément métallique (7) est disposé sur ou dans la vitre de véhicule, de telle sorte que de la chaleur est dissipée hors d'une région du champ chauffant avec production de chaleur accrue au moyen d'une conduction thermique de l'élément métallique (7).

15. Utilisation d'une vitre de véhicule selon l'une des revendications 1 à 13, dans des moyens de locomotion pour le transport sur terre, dans les airs ou dans l'eau, de préférence dans des véhicules automobiles et en particulier en tant que pare-brise.
